(19) Europäisches Patentamt
European Patent Office
Office européen des brevets

(11) **EP 4 664 152 A1**

(12) **EUROPEAN PATENT APPLICATION**
published in accordance with Art. 153(4) EPC

(43) Date of publication:
**17.12.2025 Bulletin 2025/51**

(21) Application number: **24759758.6**

(22) Date of filing: **23.02.2024**

(51) International Patent Classification (IPC):
**G01S 7/483** (2006.01)     **G01S 17/00** (2020.01)

(52) Cooperative Patent Classification (CPC):
**G01S 7/483; G01S 7/497; G01S 17/00; G01S 17/08**

(86) International application number:
**PCT/CN2024/078278**

(87) International publication number:
**WO 2024/175084 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023   CN 202310203815**

(71) Applicant: **Shenzhen Yinwang Intelligent Technologies Co., Ltd.**
**Shenzhen, Guangdong 518110 (CN)**

(72) Inventors:
• YU, Zhong
  Shenzhen, Guangdong 518129 (CN)
• ZHOU, Yilun
  Shenzhen, Guangdong 518129 (CN)
• SHI, Xianling
  Shenzhen, Guangdong 518129 (CN)

(74) Representative: **MERH-IP Matias Erny Reichl Hoffmann**
**Patentanwälte PartG mbB**
**Paul-Heyse-Straße 29**
**80336 München (DE)**

(54) **DETECTOR CONFIGURATION METHOD AND LASER RADAR**

(57)     A detector configuration method and a lidar are provided, which relate to the field of lidars. The method includes: detecting a received first optical signal, to obtain data of a light spot of the first optical signal, where the data includes a position and a dimension of the light spot (S310); and when a difference between the data and an expected value is less than a first preset threshold, adjusting a detection region based on the first optical signal, to cause the first optical signal whose energy is greater than $1/n$ of peak energy to be in the detection region (S320), where the expected value includes an expected position and an expected dimension of the light spot, the detection region is a region that is of a detector and that is configured to detect an echo optical signal during operation of the detector, and n is a number greater than 0. According to the method, when the echo optical signal deviates from a preconfigured detection region, the detection region is adjusted, so that the echo optical signal falls in the detection region. This reduces impact of an external condition on a detection effect of the detector, and improves operation stability of the detector.

300

| |
| --- |
| Detect a received first optical signal, to obtain data of a light spot of the first optical signal, where the data includes a position and a dimension of the light spot |

310

| |
| --- |
| When a difference between the data and an expected value is less than a first preset threshold, adjust a detection region based on the first optical signal, to cause the first optical signal whose energy is greater than 1/n of peak energy to be in the detection region |

320

FIG. 3

EP 4 664 152 A1

# Description

This application claims priority to Chinese Patent Application No. 202310203815.9, filed with the China National Intellectual Property Administration on February 24, 2023 and entitled "DETECTOR CONFIGURATION METHOD AND LIDAR", which is incorporated herein by reference in its entirety.

## TECHNICAL FIELD

This application relates to the field of lidars, and in particular, to a detector configuration method and a lidar.

## BACKGROUND

A lidar is a ranging device commonly used in daily life. An operation principle of the lidar is as follows: An optical system transmits a laser beam and receives an echo optical signal of the laser beam, and a signal processing unit processes the echo optical signal to obtain a distance of a target.

During actual application, to prevent a signal-to-noise ratio of the echo optical signal from being too low, not all of detection units on a detector are used to detect the echo optical signal, but a region formed by some of the detection units on the detector is preconfigured to detect the echo optical signal. Because it is difficult for current processes to ensure consistency of optical imaging positions under external conditions such as a high temperature, a low temperature, and aging, the echo optical signal may deviate from the preconfigured detection region, affecting a detection effect of the detector on the echo optical signal.

## SUMMARY

This application provides a detector configuration method. When the echo optical signal deviates from a preconfigured detection region, the detection region is adjusted, so that the echo optical signal falls in the detection region. This reduces impact of an external condition on a detection effect of the detector, and improves operation stability of the detector.

According to a first aspect, this application provides a detector configuration method. The method includes: detecting a received first optical signal, to obtain data of a light spot of the first optical signal, where the data includes a position and a dimension of the light spot; and when a difference between the data and an expected value is less than a first preset threshold, adjusting a detection region based on the first optical signal, to cause the first optical signal whose energy is greater than 1/n of peak energy to be in the detection region, where the expected value includes an expected position and an expected dimension of the light spot, the detection region is a region that is of a detector and that is configured to detect an echo optical signal during operation of the detector, and n is a number greater than 0.

Based on the method, it is determined, based on the difference between the data of the first optical signal and the expected value, whether the echo optical signal deviates from a preconfigured detection region. When the echo optical signal deviates from the detection region, the detection region is adjusted, so that the echo optical signal falls in the detection region. This reduces impact of an external condition on a detection effect of the detector.

With reference to the first aspect, in some possible implementations of the first aspect, the detecting a received first optical signal, to obtain data of a light spot of the first optical signal includes: converting the first optical signal into an electrical signal; and obtaining the data through computing based on the electrical signal.

A method for obtaining the data of the light spot of the first optical signal may be: performing computing based on the electrical signal obtained by converting the first optical signal.

With reference to the first aspect, in some possible implementations of the first aspect, the detector is a non-linear detector; and after the converting the first optical signal into an electrical signal, the method further includes: performing non-linear recovery on the electrical signal.

By way of example rather than limitation, the non-linear detector includes a single-photon avalanche diode (single-photon avalanche diode, SPAD), or a silicon photomultiplier (silicon photomultiplier, SiPM).

When the detector is a non-linear detector, non-linear recovery may be performed on the electrical signal, and then computing is performed based on an electrical signal obtained through the non-linear recovery. Performing non-linear recovery on the electrical signal helps improve accuracy of computing the data of the light spot.

With reference to the first aspect, in some possible implementations of the first aspect, the detecting a received first optical signal includes: detecting a first optical signal received in a monitoring region, where the monitoring region is a region that is of the detector and that is configured to receive the first optical signal, a quantity of detection units included in the monitoring region is greater than or equal to 2, and the detection unit is a smallest unit that is on the detector and that is configured to detect an optical signal.

The detector may include a plurality of detection units. One detector may include only one sensor, and the detection unit may be a pixel in the sensor. Alternatively, one detector may include a plurality of sensors, and the detection unit may be every independent sensor.

The monitoring region may include all the detection units on the detector, to perform full monitoring on the first optical signal; or may include some of the detection units on the detector, to perform sampled monitoring on the first optical signal. In a case of sampled monitoring, the quantity of detection units, that is, a sample size, is at least 2. This helps ensure an abundant sample size and improve accuracy of sampled monitoring.

With reference to the first aspect, in some possible implementations of the first aspect, the method further includes: determining that the difference between the data and the expected value is greater than a second preset threshold, and a value of the second preset threshold is less than that of the first preset threshold.

The value of the second preset threshold is less than that of the first preset threshold means that the second preset threshold is a restrictive condition that is stricter than the first preset threshold. Before it is determined that the first optical signal deviates from a receiving region, the deviation of the first optical signal may be first determined by a stricter condition. If the first optical signal can satisfy this stricter condition, it means that the deviation of the first optical signal is extremely small, and the receiving region does not need to be adjusted.

With reference to the first aspect, in some possible implementations of the first aspect, the method further includes: detecting a second optical signal received in the detection region; and when a signal-to-noise ratio of the second optical signal is lower than a third preset threshold, performing one or more of the following: increasing power of a transmit end, increasing detection efficiency of the detector, and reminding an operator to clean a window.

After the first optical signal falls in the detection region or the detection region is adjusted, a laser beam may be re-transmitted, and whether a performance requirement is satisfied is determined based on the received second optical signal. Remedial measures need to be taken when the performance requirement is not satisfied. For example, the remedial measures may be increasing the power of the transmit end, increasing the detection efficiency of the detector, and reminding the staff member to clean the window.

With reference to the first aspect, in some possible implementations of the first aspect, the method further includes: when the difference between the data and the expected value is greater than or equal to the first preset threshold, discarding the data of the light spot of the first optical signal.

If the difference between the data of the first optical signal and the expected value is excessively large, the first optical signal may be an interference signal, and the data of the light spot of the first optical signal may be discarded.

According to a second aspect, this application provides a lidar. The lidar includes a processing module and an execution module. The processing module is configured to detect a received first optical signal, to obtain data of a light spot of the first optical signal, where the data includes a position and a dimension of the light spot. The execution module is configured to: when a difference between the data and an expected value is less than a first preset threshold, adjust a detection region based on the first optical signal, to cause the first optical signal whose energy is greater than 1/n of peak energy to be in the detection region, where the expected value includes an expected position and an expected dimension of the light spot, the detection region is a region that is of a detector and that is configured to detect an echo optical signal during operation of the detector, and n is a number greater than 0.

With reference to the second aspect, in some possible implementations of the second aspect, the processing module is configured to: convert the first optical signal into an electrical signal; and obtain the data through computing based on the electrical signal.

With reference to the second aspect, in some possible implementations of the second aspect, the detector is a non-linear detector; and the processing module is further configured to perform non-linear recovery on the electrical signal.

With reference to the second aspect, in some possible implementations of the second aspect, the processing module is configured to detect a first optical signal received in a monitoring region, where the monitoring region is a region that is of the detector and that is configured to receive the first optical signal, a quantity of detection units included in the monitoring region is greater than or equal to 2, and the detection unit is a smallest unit that is on the detector and that is configured to detect an optical signal.

With reference to the second aspect, in some possible implementations of the second aspect, the processing module is further configured to determine that the difference between the data and the expected value is greater than a second preset threshold, and a value of the second preset threshold is less than that of the first preset threshold.

With reference to the second aspect, in some possible implementations of the second aspect, the processing module is further configured to detect a second optical signal received in the detection region. The execution module is further configured to: when a signal-to-noise ratio of the second optical signal is lower than a third preset threshold, perform one or more of the following: increasing power of a transmit end, increasing detection efficiency of the detector, and reminding an operator to clean a window.

With reference to the second aspect, in some possible implementations of the second aspect, the execution module is further configured to: when the difference between the data and the expected value is greater than or equal to the first preset threshold, discard the data of the light spot of the first optical signal.

According to a third aspect, this application provides a lidar, including a memory and a processor. The memory is configured to store a computer program; and the processor is configured to invoke and execute the computer program, to implement the detector configuration method according to any one of the first aspect or the possible implementations of the first aspect.

According to a fourth aspect, this application

**EP 4 664 152 A1**

provides a computer-readable storage medium, including a computer program. When the computer program is run on a computer, the computer is enabled to implement the method according to any one of the first aspect or the possible implementations of the first aspect.

According to a fifth aspect, this application provides a computer program product. The computer program product includes a computer program (which may also be referred to as code or instructions). When the computer program is run, a computer is enabled to perform the method according to any one of the first aspect or the possible implementations of the first aspect.

It should be understood that technical solutions of the second aspect to the fifth aspect correspond to that of the first aspect, and beneficial effects achieved by the aspects and the corresponding feasible implementations are similar. Details are not described again.

## BRIEF DESCRIPTION OF DRAWINGS

FIG. 1 is a diagram of a lidar applicable to a detector configuration method according to an embodiment of this application;
FIG. 2 is a diagram of a detector according to an embodiment of this application;
FIG. 3 is a schematic flowchart of a detector configuration method according to an embodiment of this application;
FIG. 4 is a diagram of a possible arrangement manner of a detection region and a monitoring region according to an embodiment of this application;
FIG. 5 is a diagram of a range of a light spot according to an embodiment of this application;
FIG. 6 is a diagram of a manner of computing a position of a light spot according to an embodiment of this application;
FIG. 7 is a diagram of adjusting a detection region according to an embodiment of this application;
FIG. 8 is another schematic flowchart of a detector configuration method according to a method embodiment;
FIG. 9 is a block diagram of a lidar according to an embodiment of this application; and
FIG. 10 is another block diagram of a lidar according to an embodiment of this application.

## DESCRIPTION OF EMBODIMENTS

The following describes technical solutions of this application with reference to accompanying drawings.

In embodiments of this application, the terms "first", "second", and the like are intended to distinguish between similar objects but do not necessarily indicate a specific order or sequence. Further, the term "include" and any variation thereof are intended to cover a non-exclusive inclusion.

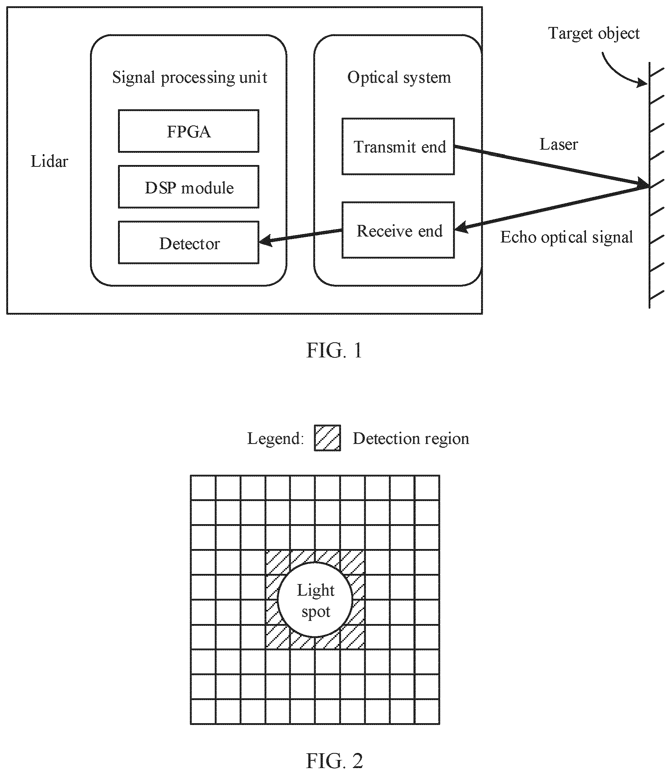

FIG. 1 is a diagram of a lidar applicable to a detector configuration method according to an embodiment of this application.

As shown in FIG. 1, the lidar may include a signal processing unit and an optical system. When the lidar is operating, a transmit end of the optical system emits a laser beam, and the laser beam is reflected on a target object to obtain an echo optical signal. A receive end receives the echo optical signal, and a detector detects the echo optical signal to obtain related data of the echo optical signal. A field programmable gate array (field programmable gate array, FPGA) and a digital signal processing (digital signal processing, DSP) module process the data to obtain a distance of the target object.

The detector may include a plurality of detection units. One detector may include only one sensor, and the detection unit may be a pixel in the sensor. Alternatively, one detector may include a plurality of sensors, and the detection unit may be every independent sensor.

During actual application, to prevent a signal-to-noise ratio of the echo optical signal from being too low, not all of the detection units on the detector are used to detect the echo optical signal, but a region formed by some of the detection units on the detector is preconfigured to detect the echo optical signal.

FIG. 2 is a diagram of a detector according to an embodiment of this application. As shown in FIG. 2, each small grid represents a detection unit. When a lidar operates normally, a light spot of an echo optical signal falls in a position shown in the figure. In this case, a shaded region shown in the figure on the detector may be preconfigured as a detection region.

However, in current processes, it is difficult to ensure consistency of optical imaging positions under conditions such as a high temperature, a low temperature, and aging. Consequently, the echo optical signal may deviate from the preconfigured detection region, affecting a detection effect of the detector on the echo optical signal.

In view of this, this application provides a detector configuration method, to adjust the detection region when the echo optical signal deviates from the preconfigured detection region, so that the echo optical signal falls in the detection region.

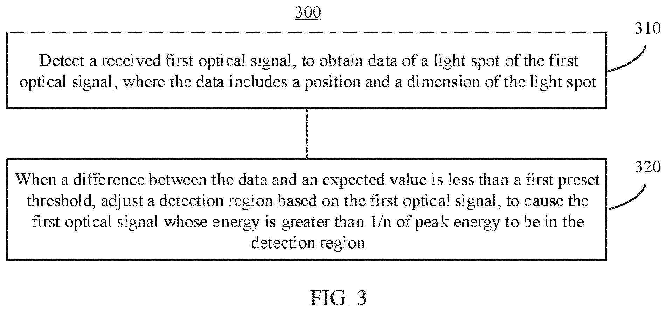

FIG. 3 is a schematic flowchart of a detector configuration method according to an embodiment of this application. The method 300 may be performed by a lidar, or may be an element such as a processor in the lidar. This is not limited in this application.

The method 300 shown in FIG. 3 may include step 310 and step 320. The following describes the steps in the method 300 in detail.

Step 310: Detect a received first optical signal, to obtain data of a light spot of the first optical signal, where the data includes a position and a dimension of the light spot.

The lidar may emit a laser beam, and then receive an echo optical signal of the laser beam. The echo optical signal may be denoted as the first optical signal.

The first optical signal may be an optical signal received in a monitoring region preconfigured on a detector, and the monitoring region is a region that is of the detector and that is configured to receive the first optical signal. It should be understood that, for the detector to monitor the first optical signal more effectively, the monitoring region may include all detection units on the detector, and the detector may perform full monitoring on the first optical signal. Performing full monitoring means that each detection unit on the detector needs to be in an operation state, which may cause higher power consumption. To reduce power consumption, the monitoring region may include some of the detection units on the detector, and the detector performs sampled monitoring on the first optical signal based on the monitoring region formed by these detection units. To ensure an abundant sample size, a quantity of detection units included in the monitoring region needs to be at least 2. This helps ensure an abundant sample size and improve accuracy of sampled monitoring.

It should be understood that a larger quantity of detection units included in the monitoring region (that is, a larger sample size) indicates a better monitoring effect of the detector on the first optical signal. However, power consumption is correspondingly higher. Therefore, during actual application, the quantity of detection units included in the monitoring region may be appropriately selected, to achieve a balance between a monitoring effect and power consumption.

It should be further understood that when the detector performs full monitoring on the first optical signal, it may be considered that the entire detector is the monitoring region, or it may be considered that there is no monitoring region, but the entire detector is used to receive the first optical signal.

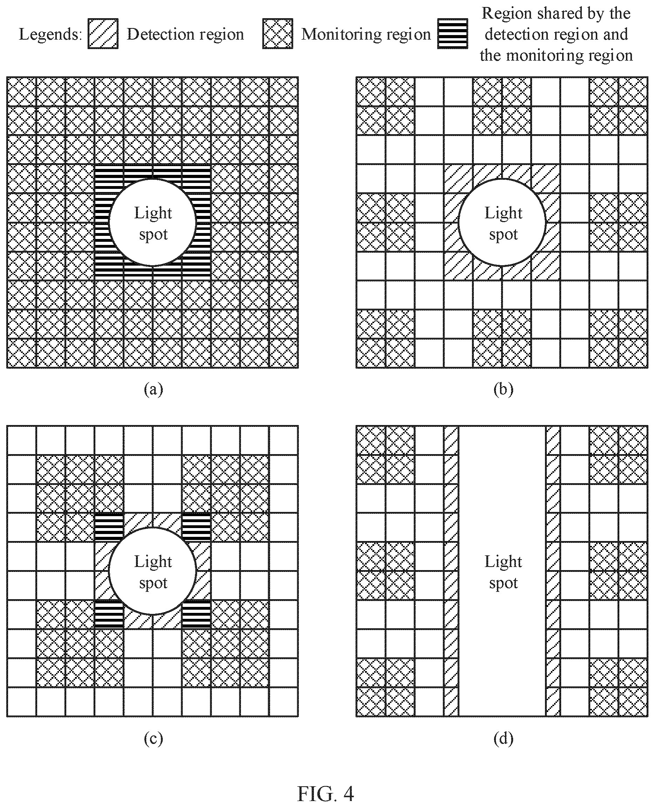

FIG. 4 is a diagram of a possible arrangement manner of a detection region and a monitoring region according to an embodiment of this application.

A first possible arrangement manner is shown in (a) in FIG. 4. The light spot of the first optical signal is a circular light spot. The detection region includes 16 detection units in the middle, and the 16 detection units form a square region with a dimension of 4×4. The monitoring region includes all the detection units on the detector.

In this case, the detector performs full monitoring on the first optical signal. 16 detection units are shared by the detection region and the monitoring region.

A second possible arrangement manner is shown in (b) in FIG. 4. The light spot of the first optical signal is a circular light spot. The detection region includes 16 detection units in the middle, and the 16 detection units form a square region with a dimension of 4×4. The monitoring region includes eight groups of detection units on the detector. The eight groups of detection units are distributed around the detection region. Each group of detection units includes four detection units, and the four detection units form a square region with a dimension of 2×2.

In this case, the detector performs sampled monitoring on the first optical signal with a sample size of 32. No detection unit is shared by the detection region and the monitoring region.

A third possible arrangement manner is shown in (c) in FIG. 4. The light spot of the first optical signal is a circular light spot. The detection region includes 16 detection units in the middle, and the 16 detection units form a square region with a dimension of 4×4. The monitoring region includes four groups of detection units on the detector. The four groups of detection units are distributed around the detection region. Each group of detection units includes nine detection units, and the nine detection units form a square region with a dimension of 3×3.

In this case, the detector performs sampled monitoring on the first optical signal with a sample size of 36. Four detection units are shared by the detection region and the monitoring region.

A fourth possible arrangement manner is shown in (d) in FIG. 4. The light spot of the first optical signal is a strip-shaped light spot. The detection region includes 40 detection units, and the 40 detection units form a strip-shaped region with a dimension of 4×10. The monitoring region includes six groups of detection units on the detector. The six groups of detection units are distributed on two sides of the detection region. Each group of detection units includes four detection units, and the four detection units form a square region with a dimension of 2×2.

In this case, the detector performs sampled monitoring on the first optical signal with a sample size of 24. No detection unit is shared by the detection region and the monitoring region.

During actual application, alternatively, the monitoring region may be set at a small interval at a position at which an energy intensity of an optical signal is attenuated quickly, and the monitoring region may be set at a large interval at a position at which the energy intensity of the optical signal is attenuated slowly. The foregoing possible arrangement manners of the detection region and the monitoring region are merely examples. The arrangement manners of the detection region and the monitoring region are not limited in this application.

Spatial energy distribution of the optical signal on a cross section does not have a clear boundary, but instead, is stronger at the center and weaker at edges, resembling a Gaussian distribution. Theoretically, energy of the optical signal can extend infinitely on the cross section.

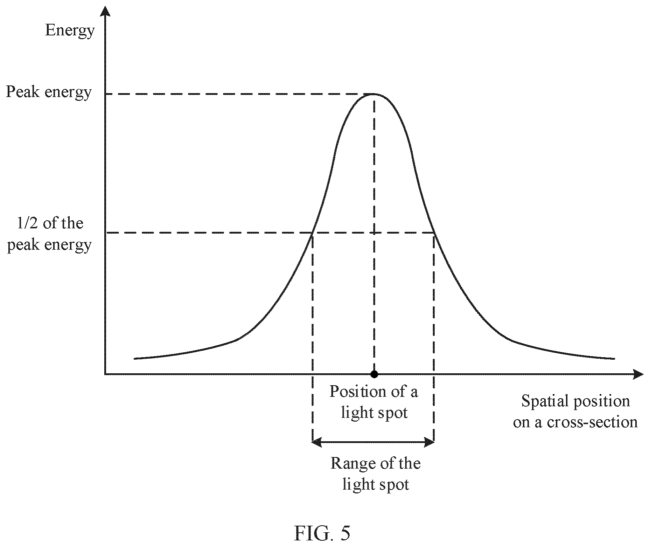

During actual application, it may be specified in advance that a range of an optical signal whose energy is greater than 1/n of peak energy is a range of a light spot, where n may be a number greater than 0 that is specified in advance. As shown in FIG. 5, if n is 2, a range of an optical signal greater than 1/2 of the peak energy is the range of the light spot.

Therefore, in (b) and (d) in FIG. 4, even if the range of the light spot is not within the monitoring region, the detection units in the monitoring region may detect the first optical signal. Each detection unit in the monitoring region converts the first optical signal received by the detection unit into an electrical signal, where the electrical signal includes information such as signal strength and a pulse width. The signal processing unit may further obtain a position and a dimension of the light spot through computing based on the electrical signal.

In embodiments of this application, the position of the light spot is a position of the peak energy of the light spot. For circular light spots, such as the circular light spots shown in (a), (b), and (c) in FIG. 4, the position of the light spot is generally a position of a center of the circular light spot. For a strip-shaped light spot, such as the strip-shaped light spot shown in (d) in FIG. 4, the position of the light spot is generally a position of a central line of the strip-shaped light spot. The dimension of the light spot is a dimension of the range of the optical signal whose energy is greater than 1/n of the peak energy. For the circular light spots, such as the circular light spots shown in (a), (b), and (c) in FIG. 4, the dimension of the light spot is a diameter of the circular light spot. For the strip-shaped light spot, such as the strip-shaped light spot shown in (d) in FIG. 4, the dimension of the light spot is a width of the strip-shaped light spot.

When the detector performs full monitoring on the first optical signal, a large amount of information is obtained through full monitoring, and therefore the position and the dimension of the light spot can be accurately obtained through computing. When the detector performs sampled monitoring on the first optical signal, a small amount of information is obtained through sampled monitoring, and therefore the position and the dimension of the light spot can be estimated.

For the circular light spots, the position of the light spot may be represented by two-dimensional coordinates. For the strip-shaped light spot, the position of the light spot may be represented by a one-dimensional coordinate.

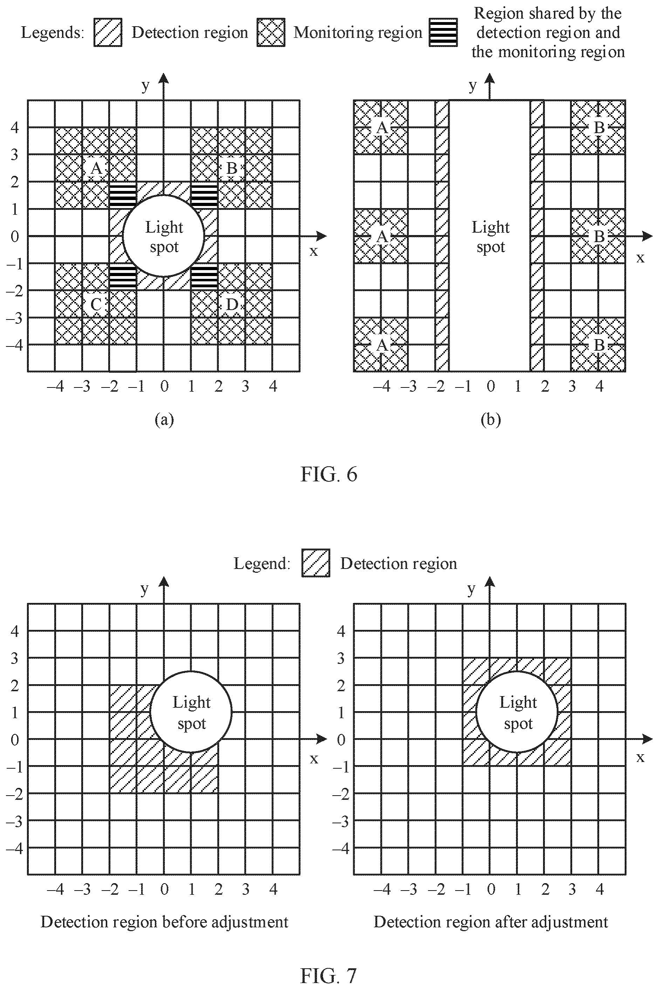

FIG. 6 is a diagram of a manner of computing a position of a light spot according to an embodiment of this application.

As shown in (a) in FIG. 6, the light spot of the first optical signal is a circular light spot. A center of the light spot is a point on a two-dimensional plane, and has a horizontal coordinate and a vertical coordinate. The monitoring region includes four groups of detection units, and the four groups of detection units are respectively located in four quadrants of a plane of the detector. The four groups of detectors are arranged symmetrically along both an x-axis and a y-axis. Energy intensities of optical signals detected in the monitoring region formed by the four groups of detection units are A, B, C, and D. An x-axis coordinate of the position of the light spot is denoted as $x_a$. A y-axis coordinate of the position of the light spot is denoted as $y_a$. $x_a$ and $y_a$ respectively satisfy:

$$x_a = \frac{(B+D)-(A+C)}{A+B+C+D}$$

$$y_a = \frac{(A+B)-(C+D)}{A+B+C+D}$$

As shown in (b) in FIG. 6, the light spot of the first optical signal is a strip-shaped light spot. A center of the light spot is a straight line extending along a y-axis on a two-dimensional plane, and has only a horizontal coordinate. Detection units included in the monitoring region are located on a left side and a right side of the y-axis, and are symmetric along the y-axis. Energy intensities of optical signals detected by detection units on the left side of the strip-shaped light spot each are A, and energy intensities of optical signals detected by detection units on the right side of the strip-shaped light spot each are B. An x-axis coordinate of the position of the light spot is denoted as $x_b$. $x_b$ satisfies:

$$x_b = \frac{B-A}{A+B}$$

When the detector is a non-linear detector such as an SPAD or a SiPM, non-linear recovery may be performed on the electrical signal, and then computing is performed based on an electrical signal obtained through the non-linear recovery. Performing non-linear recovery on the electrical signal helps improve accuracy of computing the data of the light spot.

Step 320: When a difference between the data and an expected value is less than a first preset threshold, adjust the detection region based on the first optical signal, to cause the first optical signal whose energy is greater than 1/n of the peak energy to be in the detection region.

After the data of the light spot of the first optical signal is obtained through computing, the data may be compared with the expected value, to determine whether the difference between the data and the expected value is less than the first preset threshold. The expected value includes an expected position and an expected dimension of the light spot.

In an example, the light spot of the first optical signal is a circular light spot, and a width of one detection unit is defined as one unit length. The expected value is as follows: the position of the light spot is (0, 0) and the dimension of the light spot is three unit lengths. The first preset threshold is as follows: a position deviation is two unit lengths and a dimension deviation is one unit length.

If the data of the light spot of the first optical signal is as follows: the position of the light spot is (1, 1) and the dimension of the light spot is three unit lengths, a position deviation between (0, 0) and (1, 1) is $\sqrt{2}$ unit lengths, which is less than two unit lengths; and a deviation between three unit lengths and three unit lengths is 0 unit lengths, which is less than one unit length. In this case, the difference between the data and the expected value is less than the first preset threshold.

If the data of the light spot of the first optical signal is as follows: the position of the light spot is (1, 1) and the dimension of the light spot is five unit lengths, a position deviation between (0, 0) and (1, 1) is $\sqrt{2}$ unit lengths, which is less than two unit lengths; and a deviation between three unit lengths and five unit lengths is two unit lengths, which is greater than one unit length. In this case, the difference between the data and the expected value is greater than the first preset threshold.

If the data of the light spot of the first optical signal is as follows: the position of the light spot is (2, 2) and the dimension of the light spot is five unit lengths, a position deviation between (0, 0) and (2, 2) is $2\sqrt{2}$ unit lengths, which is greater than two unit lengths; and a deviation between three unit lengths and five unit lengths is two unit lengths, which is greater than one unit length. In this case, the difference between the data and the expected value is greater than the first preset threshold.

When the difference is less than the first preset threshold, the detection units included in the detection region may be adjusted, to cause the entire light spot to be in the detection region and cause a center of the light spot to be closest to a center of the detection region.

As shown in FIG. 7, the position of the light spot is (1, 1) and the dimension of the light spot is three unit lengths. The difference between the data and the expected value is less than the first preset threshold. In this case, the detection region is adjusted. Before adjustment, the detection region is a region defined by x∈[-2, 2] and y∈[-2, 2]. After adjustment, the detection region is a region defined by x∈[-1, 3] and y∈[-1, 3].

When the difference between the data of the light spot of the first optical signal and the expected value is greater than or equal to the first preset threshold, the first optical signal may be an interference signal, and the data that is of the light spot of the first optical signal and that is obtained through current detection may be discarded.

Optionally, a second preset threshold is preset. A value of the second preset threshold is less than that of the first preset threshold, and the second preset threshold is a determining condition that is stricter than the first preset threshold. Before the difference between the data and the expected value is compared with the first preset threshold, the difference between the two values may be compared with the second preset threshold first. If the difference is greater than the second preset threshold, the difference is then compared with the first preset threshold. If the difference is less than the second preset threshold, it indicates that the difference between the data of the light spot of the first optical signal and the expected value is extremely small, and the detection region does not need to be adjusted.

In an example, the light spot of the first optical signal is a circular light spot. The expected value is as follows: the position of the light spot is (0, 0) and the dimension of the light spot is three unit lengths. The second preset threshold is as follows: a position deviation is one unit length and a dimension deviation is 0.5 unit length.

If the data of the light spot of the first optical signal is as follows: the position of the light spot is (0.5, 0.5) and the dimension of the light spot is three unit lengths, a position deviation between (0, 0) and (0.5, 0.5) is $\sqrt{2}/2$ unit lengths, which is less than one unit length; and a deviation between three unit lengths and three unit lengths is 0 unit lengths, which is less than 0.5 unit length. In this case, the difference between the data and the expected value is less than the second preset threshold. Therefore, the difference between the data of the light spot of the first optical signal and the expected value is extremely small, and the detection region does not need to be adjusted.

If the data of the light spot of the first optical signal is as follows: the position of the light spot is (0.5, 0.5) and the dimension of the light spot is four unit lengths, a position deviation between (0, 0) and (0.5, 0.5) is $\sqrt{2}/2$ unit lengths, which is less than one unit length; and a deviation between three unit lengths and four unit lengths is one unit length, which is greater than 0.5 unit length. In this case, the difference between the data and the expected value is greater than the second preset threshold. Therefore, the difference needs to be further compared with the first preset threshold.

If the data of the light spot of the first optical signal is as follows: the position of the light spot is (1, 1) and the dimension of the light spot is four unit lengths, a position deviation between (0, 0) and (1, 1) is $\sqrt{2}$ unit lengths, which is greater than one unit length; and a deviation between three unit lengths and four unit lengths is one unit length, which is greater than 0.5 unit length. In this case, the difference between the data and the expected value is greater than the second preset threshold. Therefore, the difference needs to be further compared with the first preset threshold.

When the difference between the data of the light spot of the first optical signal and the expected value is greater than the second preset threshold and less than the first preset threshold, and the detection region is adjusted; or when the difference between the data of the light spot of the first optical signal and the expected value is less than the second preset threshold, the lidar may transmit another laser beam, and then receive an echo optical signal of the laser beam. The echo optical signal may be denoted as a second optical signal.

The second optical signal received in the detection region is detected. If a signal-to-noise ratio of the second optical signal is higher than or equal to a third preset threshold, configuration of the detector is completed, and the detector may be used normally. If the signal-to-noise ratio of the second optical signal is lower than the third preset threshold, measures may be taken to increase the signal-to-noise ratio. The measures taken may include, for example, increasing power of a transmit end, increasing detection efficiency of the detector, and reminding an operator to clean a window.

Based on the method, when the echo optical signal deviates from a preconfigured detection region, the detection region is adjusted, so that the echo optical signal falls in the detection region. This reduces impact of an external condition on a detection effect of the detector, and improves operation stability of the detector.

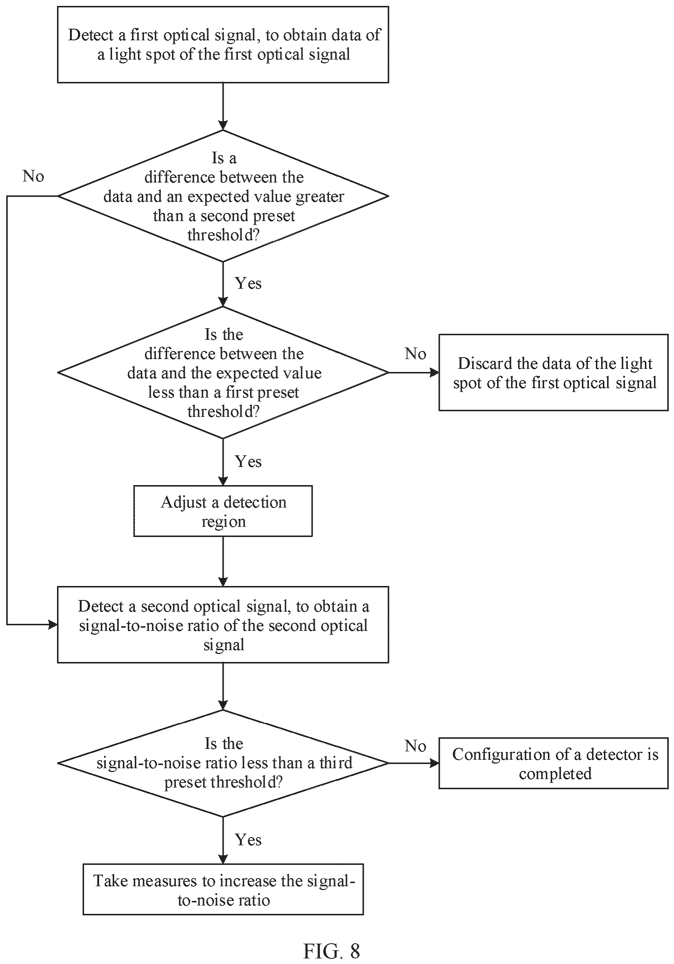

FIG. 8 is another schematic flowchart of a detector configuration method according to a method embodiment.

A lidar emits a laser beam, and then receives and detects a first optical signal, to obtain data of a light spot of the first optical signal.

The lidar may receive the first optical signal through a monitoring region on a detector, and a quantity of detection units included in the monitoring region is greater than or equal to 2.

A manner of obtaining the data of the light spot of the first optical signal may be: converting the first optical signal into an electrical signal including information such as signal strength and a pulse width, and obtaining the data through computing based on the electrical signal; or converting the first optical signal into an electrical signal, performing non-linear recovery on the electrical signal, and obtaining the data through computing based on an electrical signal obtained after the non-linear recovery.

After the data of the light spot of the first optical signal is obtained, it is determined whether a difference between the data and an expected value is greater than a second preset threshold.

When the difference between the data and the expected value is greater than the second preset threshold, it is determined whether the difference between the data and the expected value is less than a first preset threshold.

When the difference between the data and the expected value is greater than or equal to the first preset threshold, the first optical signal may be an interference signal, and the data that is of the light spot of the first optical signal and that is obtained through current detection is discarded.

When the difference between the data and the expected value is less than the first preset threshold, the detection region is adjusted, to cause the entire light spot to be in the detection region, and a center of the light spot to be closest to a center of the detection region.

After the detection region is adjusted, or when the difference between the data and the expected value is lower than or equal to the second preset threshold, the lidar may transmit another laser beam, and then receive and detect a second optical signal, to obtain a signal-to-noise ratio of the second optical signal.

When the signal-to-noise ratio is lower than a third preset threshold, measures are taken to increase the signal-to-noise ratio. The measures taken may include, for example, increasing power of a transmit end, increasing detection efficiency of the detector, and reminding an operator to clean a window.

When the signal-to-noise ratio is higher than or equal to the third preset threshold, configuration of the detector is completed, and the detector may be used normally.

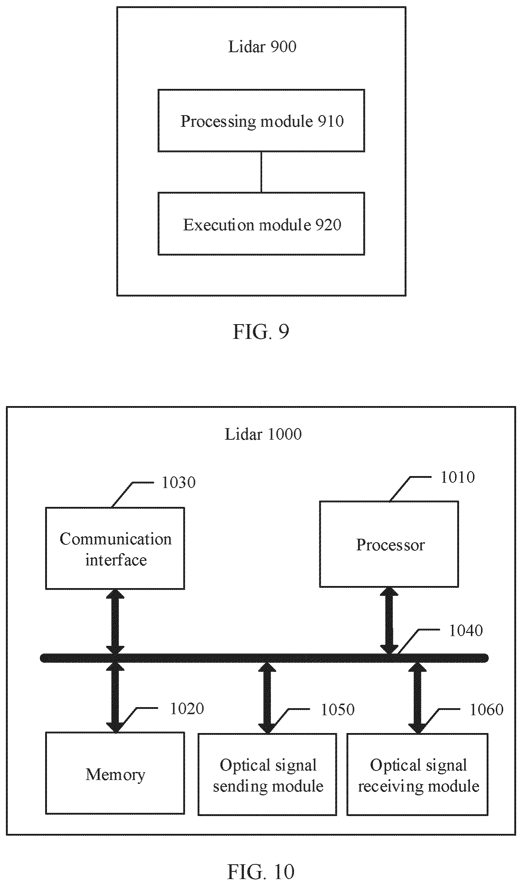

FIG. 9 is a block diagram of a lidar according to an embodiment of this application. The lidar herein may correspond to the lidar in the foregoing method embodiments, and is configured to implement a corresponding function of the lidar. As shown in FIG. 9, the lidar 900 may include a processing module 910 and an execution module 920.

The processing module 910 may be configured to detect a received first optical signal, to obtain data of a light spot of the first optical signal, where the data includes a position and a dimension of the light spot. The execution module 920 may be configured to: when a difference between the data and an expected value is less than a first preset threshold, adjust a detection region based on the first optical signal, to cause the first optical signal whose energy is greater than 1/n of peak energy to be in the detection region, where the expected value includes an expected position and an expected dimension of the light spot, the detection region is a region that is of a detector and that is configured to detect an echo optical signal during operation of the detector, and n is a number greater than 0.

Optionally, the processing module 910 is configured to: convert the first optical signal into an electrical signal; and obtain the data through computing based on the electrical signal.

Optionally, the detector is a non-linear detector. The processing module 910 is further configured to perform non-linear recovery on the electrical signal.

Optionally, the processing module 910 is further configured to detect a first optical signal received in a monitoring region, where a quantity of detection units included in the monitoring region is greater than or equal to 2, and the detection unit is a smallest unit that is on the detector and that is configured to detect an optical signal.

Optionally, the processing module 910 is further configured to determine that the difference between the data and the expected value is greater than a second preset threshold, and a value of the second preset threshold is less than that of the first preset threshold.

Optionally, the processing module 910 is further configured to detect a second optical signal received in the detection region. The execution module 920 is further configured to: when a signal-to-noise ratio of the second optical signal is lower than a third preset threshold, perform one or more of the following: increasing power of a transmit end, increasing detection efficiency of the detector, and reminding an operator to clean a window.

Optionally, the execution module 920 is further configured to: when the difference between the data and the expected value is greater than or equal to the first preset threshold, discard the data of the light spot of the first optical signal.

FIG. 10 is another block diagram of a lidar according to an embodiment of this application. The lidar may be the lidar shown in FIG. 1. As shown in FIG. 10, the lidar 1000 may include at least one processor 1010, configured to implement a function of the lidar in the foregoing method embodiments. For details, refer to the detailed descriptions in the method examples. Details are not described herein.

The lidar 1000 may further include a memory 1020, configured to store program instructions and/or data. The memory 1020 is coupled to the processor 1010. The coupling in this application may be an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. The processor 1010 may execute the program instructions stored in the memory 1020. At least one of the at least one memory may be included in the processor.

The lidar 1000 may further include a communication interface 1030, configured to communicate with another device through a transmission medium, so that an apparatus used in the lidar 1000 can communicate with the another device. The communication interface 1030 may be, for example, a transceiver, an interface, a bus, a circuit, or an apparatus that can implement receiving and sending functions. The processor 1010 may receive and send data and/or information through the communication interface 1030, and is configured to implement the detector configuration methods in embodiments corresponding to FIG. 3 and FIG. 8.

A specific medium connecting the processor 1010, the memory 1020, and the communication interface 1030 is not limited in this application. In this application, in FIG. 10, the processor 1010, the memory 1020, and the communication interface 1030 are connected through a bus 1040. The bus 1040 is represented by a bold line in FIG. 10, and a manner of connection between other components is merely an example for description, and is not limited thereto. The bus may be classified into an address bus, a data bus, a control bus, or the like. For ease of representation, only one bold line is used in FIG. 10 to represent the bus. However, it does not indicate that there is only one bus or only one type of bus.

The lidar 1000 may further include an optical signal sending module 1050, configured to send an optical signal to the outside. The optical signal sending module 1050 may include, for example, a laser, a laser modulator, and an optical lens group. The optical signal sending module 1050 may include the transmit end shown in FIG. 1.

The lidar 1000 may further include an optical signal receiving module 1060, configured to receive an optical signal. The optical signal receiving module 1060 may include, for example, an optical-to-electrical converter, a signal demodulator, and an optical lens group. The optical signal receiving module 1060 may include the receive end and the signal processing unit shown in FIG. 1.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware in the processor and a software module.

According to the method provided in this application, this application further provides a computer-readable storage medium. The computer-readable storage medium stores program code. When the program code is run on a computer, the computer is enabled to perform the detector configuration method in the foregoing embodiments.

According to the method provided in this application, this application further provides a computer program product. The computer program product includes computer program code. When the computer program code is run on a computer, the computer is enabled to perform the detector configuration method in the foregoing embodiments.

All or some of the technical solutions provided in this application may be implemented by software, hardware, firmware, or any combination thereof. When software is used to implement embodiments, all or some of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A detector configuration method, comprising:

   detecting a received first optical signal, to obtain data of a light spot of the first optical signal, wherein the data comprises a position and a dimension of the light spot; and
   when a difference between the data and an expected value is less than a first preset threshold, adjusting a detection region based on the first optical signal, to cause the first optical signal whose energy is greater than $1/n$ of peak energy to be in the detection region, wherein the expected value comprises an expected position and an expected dimension of the light spot, the detection region is a region that is of a detector and that is configured to detect an echo optical signal during operation of the detector, and $n$ is a number greater than 0.

2. The method according to claim 1, wherein the detecting a received first optical signal, to obtain data of a light spot of the first optical signal comprises:

   converting the first optical signal into an electrical signal; and
   obtaining the data through computing based on the electrical signal.

3. The method according to claim 2, wherein the detector is a non-linear detector; and

after the converting the first optical signal into an electrical signal, the method further comprises:
performing non-linear recovery on the electrical signal.

4. The method according to any one of claims 1 to 3, wherein the detecting a received first optical signal comprises:
detecting a first optical signal received in a monitoring region, wherein the monitoring region is a region that is of the detector and that is configured to receive the first optical signal, a quantity of detection units comprised in the monitoring region is greater than or equal to 2, and the detection unit is a smallest unit that is on the detector and that is configured to detect an optical signal.

5. The method according to claim 1, wherein the method further comprises:
determining that the difference between the data and the expected value is greater than a second preset threshold, and a value of the second preset threshold is less than that of the first preset threshold.

6. The method according to any one of claims 1 to 5, wherein the method further comprises:

   detecting a second optical signal received in the detection region; and
   when a signal-to-noise ratio of the second optical signal is lower than a third preset threshold, performing one or more of the following: increasing power of a transmit end, increasing detection efficiency of the detector, and reminding an operator to clean a window.

7. The method according to claim 1, wherein the method further comprises:
when the difference between the data and the expected value is greater than or equal to the first preset threshold, discarding the data of the light spot of the first optical signal.

8. A lidar, comprising:

   a processing module, configured to detect a received first optical signal, to obtain data of a light spot of the first optical signal, wherein the data comprises a position and a dimension of the light spot; and
   an execution module, configured to: when a difference between the data and an expected value is less than a first preset threshold, adjust a detection region based on the first optical signal, to cause the first optical signal whose energy is greater than $1/n$ of peak energy to be in the detection region, wherein the expected value comprises an expected position and an expected dimension of the light spot, the detection region is a region that is of a detector and that is configured to detect an echo optical signal during operation of the detector, and n is a number greater than 0.

9. The lidar according to claim 8, wherein the processing module is configured to:

    convert the first optical signal into an electrical signal; and
    obtain the data through computing based on the electrical signal.

10. The lidar according to claim 9, wherein the detector is a non-linear detector; and
    the processing module is further configured to perform non-linear recovery on the electrical signal.

11. The lidar according to any one of claims 8 to 10, wherein the processing module is configured to detect a first optical signal received in a monitoring region, the monitoring region is a region that is of the detector and that is configured to receive the first optical signal, a quantity of detection units comprised in the monitoring region is greater than or equal to 2, and the detection unit is a smallest unit that is on the detector and that is configured to detect an optical signal.

12. The lidar according to claim 8, wherein
    the processing module is further configured to determine that the difference between the data and the expected value is greater than a second preset threshold, and a value of the second preset threshold is less than that of the first preset threshold.

13. The lidar according to any one of claims 8 to 12, wherein

    the processing module is further configured to detect a second optical signal received in the detection region; and
    the execution module is further configured to: when a signal-to-noise ratio of the second optical signal is lower than a third preset threshold, perform one or more of the following: increasing power of a transmit end, increasing detection efficiency of the detector, and reminding an operator to clean a window.

14. The lidar according to claim 8, wherein
    the execution module is further configured to: when the difference between the data and the expected value is greater than or equal to the first preset threshold, discard the data of the light spot of the first optical signal.

15. A lidar, comprising a memory and a processor, wherein

    the memory is configured to store a computer program; and
    the processor is configured to invoke and execute the computer program, to cause the method according to any one of claims 1 to 7 to be performed.

16. A computer-readable storage medium, wherein the computer-readable storage medium stores a computer program, and when the computer program is executed by a processor, the method according to any one of claims 1 to 7 is implemented.

17. A computer program product, comprising a computer program, wherein when the computer program is run, the method according to any one of claims 1 to 7 is implemented.

FIG. 1

FIG. 2

<u>300</u>

| |
|---|
| Detect a received first optical signal, to obtain data of a light spot of the first optical signal, where the data includes a position and a dimension of the light spot |

310

| |
|---|
| When a difference between the data and an expected value is less than a first preset threshold, adjust a detection region based on the first optical signal, to cause the first optical signal whose energy is greater than 1/n of peak energy to be in the detection region |

320

FIG. 3

FIG. 4

FIG. 5

Legends: ▨ Detection region ⊠ Monitoring region ▤ Region shared by the detection region and the monitoring region

(a) (b)

FIG. 6

Legend: ▨ Detection region

Detection region before adjustment          Detection region after adjustment

FIG. 7

Detect a first optical signal, to obtain data of a light spot of the first optical signal

Is a difference between the data and an expected value greater than a second preset threshold?

No

Yes

Is the difference between the data and the expected value less than a first preset threshold?

No → Discard the data of the light spot of the first optical signal

Yes

Adjust a detection region

Detect a second optical signal, to obtain a signal-to-noise ratio of the second optical signal

Is the signal-to-noise ratio less than a third preset threshold?

No → Configuration of a detector is completed

Yes

Take measures to increase the signal-to-noise ratio

FIG. 8

FIG. 9

FIG. 10

## INTERNATIONAL SEARCH REPORT

| International application No. |
| --- |
| **PCT/CN2024/078278** |

### A. CLASSIFICATION OF SUBJECT MATTER

G01S7/483(2006.01)i; G01S17/00(2020.01)i

According to International Patent Classification (IPC) or to both national classification and IPC

### B. FIELDS SEARCHED

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNABS, CNTXT, VEN, CNKI: 激光, 雷达, 探测区域, 感光区域, 配置, 调整, 峰值, 门限, 阈值, 预期值, 预设值, 光斑, 位置, 尺寸, 扩大, 增大, 缩小, 减小, Lidar, laser radar, adjust, config+, peak, power, threshold, detect+, facula, light spot, SPAD, SiPM, posit+, locat+

### C. DOCUMENTS CONSIDERED TO BE RELEVANT

| Category* | Citation of document, with indication, where appropriate, of the relevant passages | Relevant to claim No. |
| --- | --- | --- |
| A | CN 115685154 A (HESAI TECHNOLOGY CO., LTD.) 03 February 2023 (2023-02-03) description, paragraphs [0007]-[0011], [0025]-[0166], and [0039], and figures 4-11 | 1-17 |
| A | CN 111198192 A (SHENZHEN SKYVERSE LTD.) 26 May 2020 (2020-05-26) entire document | 1-17 |
| A | CN 113167897 A (SUTENG INNOVATION TECHNOLOGY CO., LTD.) 23 July 2021 (2021-07-23) entire document | 1-17 |
| A | CN 113447933 A (HESAI TECHNOLOGY CO., LTD.) 28 September 2021 (2021-09-28) entire document | 1-17 |
| A | CN 115542292 A (IRAY TECHNOLOGY CO., LTD.) 30 December 2022 (2022-12-30) entire document | 1-17 |
| A | WO 2023005717 A1 (VANJEE TECHNOLOGY CO., LTD.) 02 February 2023 (2023-02-02) entire document | 1-17 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 June 2024** | **03 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2024/078278** |

| Patent document cited in search report | | | Publication date (day/month/year) | Patent family member(s) | Publication date (day/month/year) |
| --- | --- | --- | --- | --- | --- |
| CN | 115685154 | A | 03 February 2023 | None | |
| CN | 111198192 | A | 26 May 2020 | None | |
| CN | 113167897 | A | 23 July 2021 | None | |
| CN | 113447933 | A | 28 September 2021 | None | |
| CN | 115542292 | A | 30 December 2022 | None | |
| WO | 2023005717 | A1 | 02 February 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310203815